Europäisches Patentamt

European Patent Office

Office européen des brevets

(11) Publication number: **0 420 525 A2**

# EUROPEAN PATENT APPLICATION

(21) Application number: 90310378.6

(22) Date of filing: 21.09.90

(30) Priority: 28.09.89 US 413931

(43) Date of publication of application:
03.04.91 Bulletin 91/14

(84) Designated Contracting States:
DE FR GB IT NL

(51) Int. Cl.⁵: **C22B 7/02, C01G 9/06**

(71) Applicant: **AMERICAN TELEPHONE AND
TELEGRAPH COMPANY**
**550 Madison Avenue**
**New York, NY 10022(US)**

(72) Inventor: **Bohrer, Michael Philip**
**267 Dreahook Road**
**Lebanon, New Jersey 08833(US)**
Inventor: **Burgess, Robert Eugene**
**202 Ripley Station Road**
**Columbia, South Carolina 29212(US)**
Inventor: **Hazen, Wayne Wernecke**
**4199 Everett Drive**
**Wheat Ridge, Colorado 80033(US)**
Inventor: **Law, Henry Hon**
**72 Martins Lane**
**Berkeley Heights, New Jersey 07922(US)**
Inventor: **O'Hara, Patricia Ann**
**42 Harrison Avenue**
**North Plainfield, New Jerse 07060(US)**
Inventor: **Queneau, Paul Blaisdell**
**1954 Mount Zion Drive**
**Golden, Colorado 80401(US)**
Inventor: **Williams, Alan Ray**
**7216 Deframe Court**
**Arvada, Colorado 80005(US)**

(74) Representative: **Johnston, Kenneth Graham et
al**
**AT&T (UK) LTD. AT&T Intellectual Property
Division 5 Mornington Road
Woodford Green Essex, IG8 OTU(GB)**

(54) Recycling metal containing compositions.

(57) By treating a solution derived from bag filter dust--a side product from metal recycling processes--first with a minor amount of iron and subsequently with a minor amount of zinc, a product is produced that includes zinc and iron in the absence of contaminants such as cadmium, copper, nickel, lead and precious metals. Significantly, this essentially pure zinc/iron composition is commercially attractive as an animal feed supplement.

Xerox Copy Centre

# RECYCLING METAL CONTAINING COMPOSITIONS

## 1. Field of the Invention

This invention relates to recycling processes and, in particular, to the recycling of dust by-product.

## 2. Art Background

Metal, e.g. copper, containing materials are often recycled. If the scrap is coated with polymers, they are first ground and the polymers removed by pyrolysis. All the metal containing material is then typically subjected to a series of furnace treatments to separate the metals present by smelting. As a by-product of these processing steps, a composition generally denominated bag filter dust is obtained by collecting particles present in the flue gases exiting the furnace. The composition of the bag filter dust depends on the composition of the material fed to the furnaces, and the furnace operating conditions. In procedures primarily directed to salvaging metals such as copper the bag filter dust generally contains substantial levels of zinc together with impurities such as lead, copper, calcium, iron, silicon, aluminum, tin, nickel, cadmium, metal chlorides, and precious metals.

Due to the impurities in the bag filter dust, significantly more processing is required before the zinc and other metals can be salvaged. Therefore, secondary recyclers interested in reclaiming the zinc generally receive the dust at no or little cost. The secondary recyclers extensively treat the dust to obtain pure zinc and/or zinc compounds and sell this purified product.

As a result, the primary recycler can incur a significant cost in disposing of the bag filter dust. Additionally, as stricter regulations are imposed on the handling of materials such as lead, it is possible secondary recyclers might no longer be interested in the bag filter dust. Thus, bag filter dust is currently a liability for primary recyclers and may in the future present intense disposal problems.

## Summary of the Invention

By leaching bag filter dust in, for example, aqueous acid, followed by leachant purification using iron and subsequently zinc cementation, a product is produced that includes zinc and iron in the essential absence of contaminants such as lead, cadmium, copper, nickel and precious metals. Significantly, this essentially pure zinc/iron composition is commercially attractive as, for example, an animal feed supplement. No further recycling is necessary and an immediate market is available. Thus, a liability--the bag filter dust--is converted into an asset. Additionally, as a consequence of processing, precious metals and lead, a zinc/cadmium/nickel composite and relatively high purity cement copper are separately concentrated into recyclable or salable products. Significantly, the only by-product of the process is a dilute environmentally acceptable brine which includes primarily sodium chloride and sodium fluoride.

## Brief Description of the Drawings

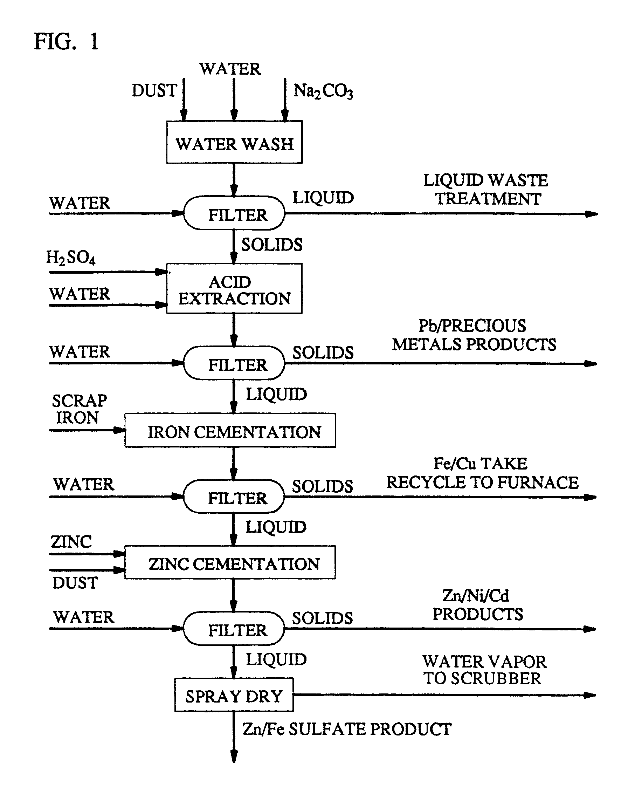

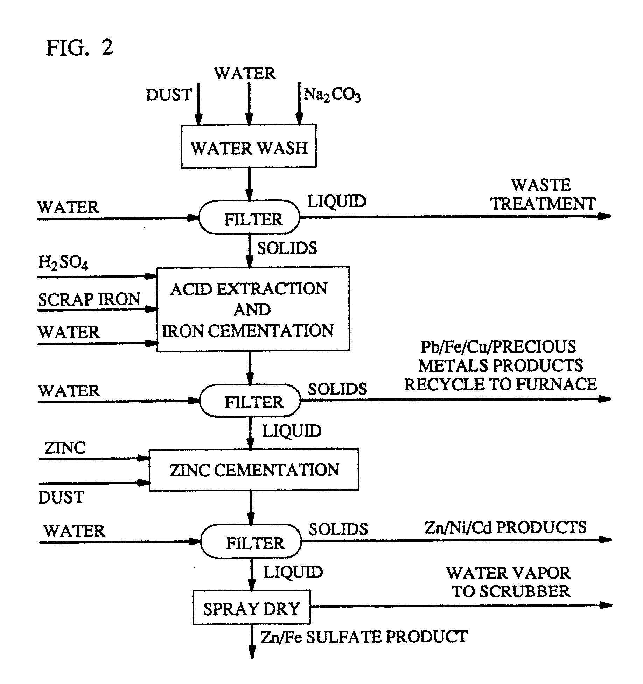

FIGs. 1 and 2 are illustrative of processes involved in the invention.

## Detailed Description

As discussed, the invention generally relates to producing a useful commodity from bag filter dust obtained during the reclaiming of metal from scrap materials such as scrap electrical cables. The general smelting processes involved in the production of bag filter dust are described in review articles such as "Extractive Metallurgy of Copper", Proceedings of the International Symposium on Copper Extraction and Refining , Feb. 22-26,1976, Las Vegas, Nev., published by The Metallurgical Society of AIME, ed. by J. C. Yannopoulos and J. C. Agarwal and "Copper; The Science and Technology of Metal, its Alloys and Compounds", ed. by A. Butts, published by Reinhold, 1954. The invention relates generally to the recycling of metal containing materials in processes that produce bag filter dust from a series of pyrolysis processes. The process is particularly advantageous for treating dusts generated during the smelting of secondary copper scrap. (See Salomon-DeFriedberg, "The Leaching of Zinc Oxide Fume with Soda Ash Solution to Control Halides at Cominco", 1988 Meeting Canadian Institute of Mining and Metallurgy, Alberta.) For pedagogic purposes, the following description will be in terms of a procedure directed to the recovery of copper with an associated production of bag filter dust. However, the invention is not so limited.

The collected dust, as shown in FIGs. 1 and 2, which generally includes zinc and a large variety of contaminants is advantageously first washed in a solution to remove halide impurities, preferably an aqueous solution such as recycled wash liquor, that is basic, e.g. pH 8 to 9.5. Basicity greater than 9.5 does not further promote precipitation while a pH less than 8 becomes less effective and causes small extracts of zinc and lead into the liquor. Typical basic solutions include aqueous sodium carbonate or sodium hydroxide. This washing removes from the dust soluble halogen entities such as fluorides and chlorides which would make the final composition unsuitable in agricultural products, e.g., animal feed or fertilizer. The washing of dust is a conventional process and various well-known techniques such as fixed-bed percolation or dispersion contacting are suitable.

After washing, the remaining material is introduced into an acid solution to solubilize the zinc present as shown in FIG. 1. Aqueous sulfuric acid is advantageously employed to accomplish this goal. (See Harris, "Hydrometallurgical Production of Zinc Sulfate Monohydrate from By-Product Materials," Mining Congress Journal , page 43(1978).) Through the use of aqueous sulfuric acid, not only is the zinc solubilized but also, to a certain extent, impurities such as copper, silicon, aluminum, nickel, iron, and other metals in the form of sulfates are removed. Although the precise pH of the acid solution is not critical, typically an acid solution with a pH in the range 0.1 to 3.5 is employed. A pH higher than 3.5 is generally not advantageous since zinc is not sufficiently removed (generally it is desirable to remove at least 85% of the zinc from the dust) while a pH lower than 0.1 is not precluded but produces an undesirable silica gel by reaction with silica impurities. The resulting zinc containing solution is filtered and the filter cake composed primarily of lead sulfate and essentially all of the precious metals is collected for sale or recycled to the furnace. Alternatively, as shown in FIG. 2, it is possible to bypass the filtration step, in which case it is possible to combine the solids (primarily lead sulfate and precious metals) with the copper/iron cement generated in the subsequent step described below. Since secondary recyclers interested in the lead and precious metals generally do not want copper or iron impurities, it is advantageous to perform the filtration prior to iron cementation if the lead/precious metals solids are to be sold.

The acid solution containing zinc sulfate entities still includes reasonably high levels of contaminants such as nickel, cadmium, copper, lead and cobalt. To yield a product suitable for agricultural uses it is preferred that two cementation processes are performed. In the first process, the solution is treated with elemental iron. Although the precise mechanical form of the iron is not critical it has been found that the addition of particulate iron most efficiently removes the undesirable contaminants. Additional experiments indicate that iron introduced into the solution in a mesh container, although effective, tends to clog the mesh pores with copper solids and as a result decreases efficacy. Therefore, in an advantageous embodiment, iron dust added directly to the solution is favored. The average particle size of the iron is not critical and typically particle sizes in the range 1 cm to 150 Tyler mesh are employed. Generally, the amount of iron employed should be in the range 1 to 5 times the stoichiometric amount of copper and lead remaining. Amounts less than 1 times stoichiometry are not advantageous since contaminants are not efficiently removed while amounts greater than 5 times stoichiometry, although not precluded, as discussed below, are not essential. The iron cementation process removes not only contaminants such as copper and lead, but also removes some of the nickel and cadmium impurities. (This is an unexpected finding since as noted by "Nickel Cementation", E. F. Fitzhugh, Jr., and D. C. Seidel, Trans. of AIME, Vol. 238, pp. 380-386, 1967, an iron cementation process typically is not effective for removing nickel at temperatures less than 100°C.) The resulting cake containing primarily copper and iron is returned to the furnaces for smelting.

Since cadmium is not typically completely (to less than 0.010 g/l) removed by the previously described levels of iron in cementation, and since the presence of this impurity is not desirable for agricultural uses, a second cementation process is required if removal of cadmium is desired. (However, with significantly higher levels of iron, e.g. levels higher than 5 times stoichiometry and treatment times typically longer than one hour, effective removal of cadmium and nickel is possible without subsequent treatment.) The removal of cadmium and other impurities such as nickel and cobalt is advantageously performed by the addition of zinc. It is convenient to add the zinc in the form of dust. The size of the dust particles is not critical, however, generally the average particle size is in the range 10 to 200 Tyler mesh. Zinc has been found to be extremely advantageous for the second cementation process since it does not contaminate the ultimate product, and effectively cements out nickel, cadmium, and cobalt. Generally, zinc concentrations are employed in the range 3 to 100 times stoichiometry based on the quantity of nickel and cadmium present. Typically, concentrations less than 3 times stoichiometry do not efficiently remove contaminants such as cadmium while concentrations greater than 100 times stoichiometry, although not precluded, are not

EP 0 420 525 A2

economic. For large batches, concentrations less than 3 times stoichiometry are not as disfavored since the smaller ratio of exposed liquid surface area to total liquid volume diminishes zinc oxidation and results in more efficient use of the zinc. Addition of small amounts of copper (0.2-0.4 g/l) and lead (0.1-0.3 g/l) are found to enhance the cementation of nickel. It is possible to add this copper and lead as reagents such as $CuSO_4$ and $PbSO_4$ or the corresponding amount of raw bag filter dust could be used (~4g/l). Contrary to previous reports such as "Nonferrous Extractive Metallurgy", C. B. Gill, pub. by Wiley, 1980 and "New Developments in the Zinc Dust Purification of Zinc Plant Electrolyte", R. W. Adams and R. L. Chapman, Aus. I.M.M. Melbourne Branch, Symposium on Extractive Metallurgy, Nov. 1984, the addition of antimony compounds are not necessary for removing nickel

When the solution concentration of Ni and Cd is reduced to a sufficiently low level (typically less than 10 mg/l), the solution is filtered and the solids, primarily Zn, Ni and Cd, are collected for sale. It is possible to add a reducing agent such as formic acid to the zinc/iron sulfate solution to retard oxidation of ferrous iron to ferric during subsequent storage and handling.

After the two cementation processes, the zinc sulfate and iron sulfate remaining in solution are collected by conventional processes such as spray drying or evaporation. (Description of these processes is found in "Chemical Engineers' Handbook", ed. by R. H. Perry and C. H. Chilton, 5th Ed., McGraw-Hill, NY, 1973.) The resulting zinc and iron containing compositions (primarily in the form of sulfates) is relatively pure, e.g., contaminant levels are less than 6 weight percent. It is advantageous, although not essential, to have a composition that has a zinc to iron weight ratio in the range 1:1 to 3:2. The recycled composition is easily adjusted to this ratio range by adding a suitable amount of iron sulfate to the product. The resulting zinc/iron material is suitable as animal feed supplement. Alternatively, it is possible to recover zinc sulfate without iron sulfate to form compositions suitable in fertilizer. The presence of iron compounds is eliminated by precipitating iron hydroxide from the zinc sulfate and iron sulfate solution using standard methods of oxidation and hydrolysis. Alternatively, the presence of iron compounds is avoided by first precipitating iron hydroxide from the acid solution and by using zinc rather than iron for the first cementation process in a corresponding amount. Since zinc, in the case where iron is not desired, is used in both cementation processes, it is possible to combine these steps by using a combined amount of zinc in one cementation step.

The following examples are illustrative of conditions involved in the subject invention.

EXAMPLE 1

Bag filter dust was collected from the copper smelting furnace flues at the AT&T Nassau Metals facility yielding the composition shown in Table 1. The dust (500 g) was water washed by forming a slurry with 1350 ml of de-ionized water. The slurry was agitated, heated to 90°C, and pH adjusted to 9-9.5 with sodium carbonate. After 3.5 hours, the slurry was vacuum filtered on a Büchner funnel and the cake was washed four times with 185 ml of de-ionized water each time. The moisture content of the cake was 33.5% and the composition is listed in Table 1.

4

Table 1

| Element | Concentration (% w/w, dry basis) | | |
|---|---|---|---|
| | Bag Filter Dust | Water-Washed Solids | Acid Extracted Solids |
| Zn | 23.50 | 25.70 | 1.30 |
| Cu | 8.87 | 8.94 | 1.66 |
| Pb | 8.36 | 8.92 | 14.6 |
| Sn | 1.03 | 1.28 | 1.66 |
| Fe | 2.25 | 2.31 | 1.58 |
| Ni | 0.12 | 0.14 | 0.08 |
| Sb | 0.28 | 0.30 | 0.45 |
| Si | 0.66 | 0.76 | 0.26 |
| Al | 1.98 | 1.95 | 0.92 |
| Cd | 0.17 | 0.17 | 0.02 |
| Cl | 5.68 | 1.02* | - |
| Ag | 438 ppmw | 817 ppmw | 773 ppmw |
| Au | 25 ppmw | 44 ppmw | 42 ppmw |
| Pd | 8.3 ppmw | 14.4 ppmw | 13.0 ppmw |
| Pt | 0.5 ppmw | 1.2 ppmw | 1.2 ppmw |

* Based on analysis of filtrate and washes.

Acid extraction was performed with 500 g of the water-washed cake from above. Initially, a slurry heel was formed by mixing 50 g of the wet cake with 300 ml of de-ionized water. The slurry was heated to 90°C and maintained at this temperature with agitation. Reagent grade sulfuric acid (95-98%) was added dropwise to maintain a pH of 2-2.5. Additional cake was added 50 g at a time until a total of 500 g had been added. De-ionized water was also added to give a total slurry volume of 870 ml. After 5 hours, the stirring was terminated and the slurry was allowed to cool to room temperature overnight. The following morning, the slurry was heated to 90°C with agitation and then vacuum filtered on a Büchner funnel and the cake washed 4 times with approximately 200 ml of de-ionized water each time. The composition of the filter cake is given in Table 1 and the composition of the filtrate and washes and the extraction efficiencies are listed in Table 2. The filter cake had a moisture content of 34.6% and 281 g were collected. The filtrate had a specific gravity of 1.42 and 797 g were collected.

Table 2

| Element | Concentration (g/l) | | | | | Extraction Efficiency (%) |
|---|---|---|---|---|---|---|
| | Filtrate | Wash 1 | Wash 2 | Wash 3 | Wash 4 | |
| Zn | 113.0 | 26.8 | 12.6 | 2.3 | 0.9 | 85 |
| Cu | 39.4 | 14.9 | 4.7 | 1.1 | 0.3 | 90 |
| Ni | 0.35 | 0.13 | 0.05 | 0.01 | 0.003 | 51 |
| Fe | 5.5 | 1.7 | 0.4 | 0.14 | 0.05 | 47 |
| Pb | 0.05 | - | - | - | 0.01 | 0.09 |
| Cd | 0.84 | - | - | - | 0.009 | 83 |
| Vol. (ml) | 562 | 211 | 219 | 208 | 142 | |

Removal of the copper and lead by cementation was accomplished by adding 7.08 g (2 times stoichiometric based on the copper and lead) of about 10 mesh scrap iron particles to 100 ml of the filtrate. The solution was stirred and maintained at 90°C for 4 hours. Nearly all of the copper and lead had been eliminated within 2 hours as demonstrated by the results given in Table 3. The concentrations of nickel and cadmium were not reduced under these conditions. The zinc/iron solution was collected by vacuum filtration on a Brüchner funnel.

Table 3

| Time (min) | Concentration* (g/l) | | | |
|---|---|---|---|---|
| | Zn | Cu | Pb | Fe |
| 0 | 113 | 39.4 | 0.05 | 5.5 |
| 30 | 113 | 1.67 | 0.014 | 43.4 |
| 72 | 113 | 0.007 | 0.028 | 50.4 |
| 120 | 113 | 0.003 | 0.022 | 58.4 |
| 180 | 113 | <0.001 | 0.006 | - |
| 240 | 113 | <0.001 | 0.006 | - |

\* Normalized to initial Zn concentration.

Final purification of the zinc/iron solution was performed by stirring and heating the solution to 90°C and then adding zinc dust (100-200 mesh) equivalent to times stoichiometric based on the molar concentration of nickel and cadmium. Untreated bag filter dust was also added as an activator to a concentration of 4 g/l. Based on six experiments using 20 ml of solution per experiment, the Ni and Cd concentrations were reduced from 252±33 (mean ± standard deviation) and 646±74 mg/l to 14±5 and 70±38 mg/l, respectively.

The zinc/iron sulfate product was isolated by evaporating to dryness a portion of solution prepared in a manner similar to that described above. The sample was dried in an oven at 95-105°C and the composition of the solution and product is given in Table 4.

Table 4

| Element | Solution Concentration (g/l) | Dry Powder |
|---|---|---|
| Zn | 102 | 22.5% |
| Fe | 48.5 | 10.8% |
| Mg | 1.91 | - |
| Cu | 0.0079 | 11 ppm |
| Cd | 0.0057 | 13 ppm |
| Ni | 0.0042 | 30 ppm |
| Pb | 0.0064 | <50 ppm |

Based on X-ray diffraction, the zinc is present in the powder as zinc sulfate monohydrate. The $ZnSO_4$ peaks obscure the $FeSO_4$ peaks, but the iron is also probably present as iron sulfate monohydrate. Based on the solution assay, the calculated purity of the dry product is 61.7% $ZnSO_4 \cdot H_2O$ and 32.8% $FeSO_4 \cdot 7H_2O$ for a total of 94.6%. The primary impurity is $MgSO_4 \cdot 7H_2O$, which is also acceptable as a component of animal feed.

EXAMPLE 2

A 100 g sample of bag filter dust was water washed as described in Example 1 except that the pH was not controlled with sodium carbonate and the dust was only leached for one hour instead of 3.5 hours. A similar extraction efficiency for chloride was found (approximately 80%), however, a significant amount of metals in the dust were also solubilized since the solids weight loss was found to be 9.4% (1 hour) vs. 4.6%

6

(3.5 hours). In particular, the zinc and iron extraction increased from less than 0.01% for each to 0.8 and 0.4%, respectively.

EXAMPLE 3

Acid extraction of metals from water-washed bag filter dust was performed exactly as described in Example 1, except that the slurry was not filtered prior to iron cementation. Instead, scrap iron (14 mesh to 3/8 inch pieces) was added directly to the slurry after 3 hours and control of the solution pH was no longer maintained. The composition of the solution prior to the iron cementation is given in the second column of Table 5.

Table 5

| Element | Concentration (g/l) | |
|---------|---------------------|--------------|
| | Before Iron Addition | After Iron Addition |
| Zn | 80.9 | 76.1 |
| Fe | 4.77 | 47.8 |
| Cu | 35.6 | <0.001 |
| Ni | .244 | 0.018 |
| Pb | <.002 | 0.054 |
| Cd | .560 | 0.009 |

An amount of iron equivalent to 8-9 times stoichiometric based on the molar concentration of copper was added. The temperature was maintained at 90°C with agitation for 4 additional hours. The solution was filtered as in Example 1 and the composition of the filtrate is given in the last column of Table 5. Compared to Example 1, the large excess of iron is found to effectively reduce the concentration of not only copper, but also nickel and cadmium.

EXAMPLE 4

Water-washed bag filter dust was acid extracted and purified by iron cementation as in Example 3 with the exception that the amount, duration, and mode of adding the scrap iron was changed. After one hour of acid extraction, scrap iron (14 mesh - 3/8 inch pieces) equal to 10 times stoichiometric based on copper was introduced into the solution by suspending in 4 stainless steel mesh bags. After 4 hours the bags were removed, emptied, filled with an equal amount of fresh scrap iron, and returned into the solution for an additional 2 hours. Copper cement was found to plug the openings in the stainless steel mesh, hindering the cementation process. After the second batch of scrap iron had been in the solution for 2 hours, the slurry was allowed to cool overnight with agitation. The following morning, the solution temperature was raised to 90°C and left for another 5 hours. To enhance the solution contact with the scrap iron, the stainless steel bags were removed at this time and about 10 mesh scrap iron was added directly to the slurry (3 times stoichiometric initially, followed by 0.6 times stoichiometric 4 hours later). After a total cementation time at 90°C of 17.5 hours, the final sample was removed for analysis. Solution assays at various times are presented in Table 6. Again, the iron cementation was found to remove not only Cu, but also Ni and Cd.

Table 6

| Element | Concentration (g/l) | | | |
|---------|----------------------|---|---|---|
| | After Acid Extraction | After Removing Bags 1st Time | After Removing Bags 2nd Time | Final Sample |
| Zn | 129 | 113 | 102 | 102 |
| Cu | 43.9 | 16.7 | 6.0 | 0.032 |
| Ni | 0.288 | 0.405 | 0.423 | 0.007 |
| Fe | 1.95 | 17.0 | - | 49.6 |
| Cd | 0.848 | 0.808 | 0.715 | 0.042 |
| Pb | - | - | - | 0.085 |

EXAMPLE 5

Final purification of the zinc/iron solution with zinc dust was performed exactly as described in Example 1 except that no bag filter dust was added as an activator. In six experiments, the Ni and Cd concentrations were reduced from 283±73 (mean ± standard deviation) and 667±76 mg/l to 73±35 and 30±10 mg/l, respectively.

EXAMPLE 6

Purification of the zinc/iron solution with zinc dust was performed exactly as described in Example 1 except that antimony (as $Sb_2O_3$) equivalent to 6% of the Ni present in solution, lead (as $PbSO_4$) equivalent to 1.5% of the zinc dust added, and copper (as $CuSO_4$) equal to the amount of Ni in solution, were added as activators. In six experiments, the Ni and Cd concentrations were reduced from 229±22 (mean ± standard deviation) and 589±39 mg/l to 24±7 and 63±41 mg/l, respectively.

EXAMPLE 7

Additional zinc dust cementation experiments were performed with a stock solution containing 45 g/l Zn, 15.8 g/l Fe, and 405 mg/l Ni. Aliquots of this solution (20 ml) were heated to 90°C with agitation. Zinc dust (0.5 g) was added with various reagents in order to determine the importance of antimony, copper, cadmium, and/or lead as activators or catalysts of the cementation of Ni by Zn. The conditions and results of these experiments are given in Table 7.

EP 0 420 525 A2

Table 7

| Expt.# | Duration (hr) | Reagents* (mg/l) | | | | Final Ni Concentration (mg/l) |
|---|---|---|---|---|---|---|
| | | Pb | Cu | Sb | Cd | |
| 1 | 4 | 0 | 0 | 0 | 0 | 93 |
| 2 | 4 | 0 | 0 | 0.42 | 0 | 127 |
| 3 | 4 | 0 | 0 | 1.0 | 0 | 193 |
| 4 | 4 | 50 | 0 | 0.42 | 0 | 89 |
| 5 | 4 | 100 | 0 | 0.42 | 0 | 2.9 |
| 6 | 4 | 250 | 0 | 0.42 | 0 | 0.4 |
| 7 | 4 | 50 | 0 | 0 | 0 | 53.2 |
| 8 | 4 | 100 | 0 | 0 | 0 | 1.2 |
| 9 | 2 | 100 | 0 | 0 | 0 | 11.8 |
| 10 | 2 | 100 | 0 | 0 | 200 | 21.3 |
| 11 | 2 | 100 | 0 | 0.42 | 0 | 13.0 |
| 12 | 2 | 100 | 0 | 0.42 | 200 | 19.1 |
| 13 | 2 | 100 | 200 | 0 | 0 | 0.9 |
| 14 | 2 | 0 | 200 | 0 | 0 | 206 |
| 15 | 2 | 100 | 200 | 0.42 | 0 | 3.1 |

* Initial concentration

Examination of the results of experiments 1-3 indicates that Sb alone has a slightly negative effect on the cementation of Ni. Furthermore, Sb in the presence of either Pb (experiments 4 vs. 7 and 5 vs. 8), Cd (11 vs. 12), or Cu (13 vs. 15) is found to have essentially no effect on the Ni cementation.

The presence of Pb is found to enhance the cementation of Ni on the zinc dust. For instance, comparing experiments 2 (no Pb), 4 (50 mg/l Pb), and 6 (100 mg/l Pb) reveals, after four hours, nickel concentrations of 127,89, and 3 mg/l, respectively. In addition, the final concentration of Pb in the solution is <1 mg/l in all three cases, indicating that Pb was cemented onto the Zn along with the Ni.

It has been reported in "New Developments in the Zinc Dust Purification of Zinc Plant Electrolyte", R. W. Adams and R. L. Chapman, Aus. I.M.M. Melbourne Branch, Symposium on Extractive Metallurgy, Nov. 1984, that Cd in the presence of small amounts of Sb assists in the removal of Co from $ZnSO_4$ solutions via zinc dust cementation. In the present study, Cd at a concentration of 200 mg/l with and without Sb was found to have no additional effect on the Ni concentration after 2 hours (experiments 10-12).

Cu in the presence of Pb is found to greatly increase the rate of Ni cementation. Comparing experiment 9 (no Cu) which has a Ni concentration of 12 mgl after 2 hours, with experiment 13(200 mg/l Cu) which has a Ni concentration of 0.9 mg/l demonstrates the rate enhancement due to the Cu. Interestingly, Cu alone (experiment 14) does not enhance the rate of Ni cementation. In all experiments in which Cu is added, it was found that essentially all of the Cu is cemented on the Zn dust.

## Claims

1. A process for producing a purified zinc containing product from bag filter dust containing 1) a zinc composition and 2) impurities, said process comprising the steps of treating said bag filter dust with an acidic medium to solubilize said zinc yielding a solubilized zinc composition, cementing out impurities from said solubilized zinc composition by adding iron, and cementing out impurities from said solubilized zinc composition by adding zinc, whereby a composition is obtained that has a substantially reduced level of said impurities.

2. The process of claim 1 wherein said acidic medium comprises sulfuric acid.

3. The process of claim 2 wherein said acid medium has a pH in the range 0.1 to 3.5.

4. The process of claim 1 including the step of washing said bag filter dust.

5. The process of claim 1 wherein said iron is added in the form of dust.

6. The process of claim 1 wherein said zinc is added in the form of dust.

**7.** The process of claim 1 wherein the amount of said iron added comprises from 1 to 2 times the stoichiometric amount of copper and lead present in said impurities.

**8.** The process of claim 1 wherein the amount of said zinc added for cementation comprises from 3 to 100 times the stoichiometric amount of nickel and cadmium present as impurities.

**9.** The process of claim 1 wherein said added iron is replaced with an equivalent amount of zinc whereby the product produced comprises a zinc composition that has a substantially reduced level of said impurities.

**10.** A process for producing a purified zinc containing product from bag filter dust containing 1) a zinc composition and 2) impurities, said process comprising the steps of treating such bag filter dust with an acidic medium to solubilize said zinc yielding a solubilized zinc composition, and cementing out impurities from said solubilized zinc by adding iron whereby a zinc/iron composition is obtained that has a reduced level of said impurities.

## FIG. 1

WATER
DUST      $Na_2CO_3$

**WATER WASH**

WATER     FILTER     LIQUID     LIQUID WASTE TREATMENT

SOLIDS

$H_2SO_4$
WATER     **ACID EXTRACTION**

WATER     FILTER     SOLIDS     Pb/PRECIOUS METALS PRODUCTS

LIQUID

SCRAP IRON     **IRON CEMENTATION**

WATER     FILTER     SOLIDS     Fe/Cu TAKE RECYCLE TO FURNACE

LIQUID

ZINC
DUST     **ZINC CEMENTATION**

WATER     FILTER     SOLIDS     Zn/Ni/Cd PRODUCTS

LIQUID     WATER VAPOR TO SCRUBBER

**SPRAY DRY**

Zn/Fe SULFATE PRODUCT

FIG. 2

WATER

DUST | | | Na₂CO₃

WATER WASH

WATER — FILTER — LIQUID — WASTE TREATMENT

SOLIDS

H₂SO₄ —
SCRAP IRON —
WATER —
ACID EXTRACTION AND IRON CEMENTATION

WATER — FILTER — SOLIDS — Pb/Fe/Cu/PRECIOUS METALS PRODUCTS RECYCLE TO FURNACE

LIQUID

ZINC —
DUST —
ZINC CEMENTATION

WATER — FILTER — SOLIDS — Zn/Ni/Cd PRODUCTS

LIQUID

SPRAY DRY — WATER VAPOR TO SCRUBBER

Zn/Fe SULFATE PRODUCT